# EUROPÄISCHE PATENTSCHRIFT

(11) **EP 3 546 140 B1**
(45) Veröffentlichungstag und Bekanntmachung des Hinweises auf die Patenterteilung: **04.01.2023**
(21) Anmeldenummer: 19159930.7
(22) Anmeldetag: 28.02.2019
(51) Int. Cl.: B25J 11/00, B25J 9/00, B25J 5/00, B25J 15/00, B23Q 7/04

(54) **BE- UND/ODER ENTLADEEINRICHTUNG SOWIE VERFAHREN ZUM BETREIBEN EINER BE- UND/ODER ENTLADEEINRICHTUNG**
LOADING AND UNLOADING DEVICE AND METHOD FOR OPERATING A LOADING AND UNLOADING DEVICED
DISPOSITIF DE CHARGEMENT ET DE DÉCHARGEMENT ET PROCÉDÉ D'UTILISATION D'UN DISPOSITIF DE CHARGEMENT ET DE DÉCHARGEMENT

(30) Priorität: 26.03.2018 DE 102018107194
(43) Veröffentlichungstag der Anmeldung: 02.10.2019
(73) Patentinhaber: SW Automation GmbH, 88069 Tettnang (DE)
(72) Erfinder: Makis, Sven, 88085 Langenargen (DE); Kilic, Metin, 88048 Efrizweiler (DE)
(74) Vertreter: Schorr, Peter Karl

(56) Entgegenhaltungen:
- EP-A1- 0 156 953
- EP-A2- 1 380 392
- JP-A- H07 186 968
- JP-A- H09 216 180
- US-A1- 2018 065 806

## Beschreibung

Die Erfindung betrifft eine verfahrbare Be- und/oder Entladeeinrichtung mit mindestens einer Transporteinheit zum Verfahren der Be- und/oder Entladeeinrichtung, mit mindestens einer an der Transporteinheit festgelegten Ablageeinheit, auf der mindestens ein Greifgegenstand anordenbar oder angeordnet ist und mit mindestens einer an der Transporteinheit festgelegten Manipulatoreinheit, die mindestens einen, insbesondere mehrachsigen, Manipulator umfasst, der mindestens ein Greifmittel zum Greifen des mindestens einen Greifgegenstands umfasst und durch den zumindest der mindestens eine Greifgegenstand in einer Bearbeitungsstation, wie Werkzeugmaschine, und/oder in oder auf der Ablageeinheit anordenbar und/oder entfernbar ist sowie ein Verfahren zum Betreiben einer Be- und/oder Entladeeinrichtung, wobei die Ablageeinheit mindestens ein Haltemittel umfasst, durch das der mindestens eine Greifgegenstand gegen ein Bewegen zumindest quer oder schräg zur Verfahrrichtung der Be- und Entladeeinrichtung festlegbar ist.

Bei Bearbeitungsanlagen, bei denen mehrere Bearbeitungsstationen vorgesehen sind, werden die zur Bearbeitung vorgesehenen Werkstücke beispielsweise mittels einer Portalvorrichtung den einzelnen Bearbeitungsstationen zugeführt.

Eine gattungsgemäße BE- oder Entladeeinrichtung ist jeweils bekannt aus EP 1 380 392 A2, US 2018/065806 A1, JP H07 186968 A, JP H09 216180 A und EP 0 156 953 A1.

Eine nicht gattungsgemäße BE- oder Entladeeinrichtung ist bekannt aus DE 10 2005 009 283 A1, bei der Werkstücke unmittelbar an der Be- und/oder

Entladeeinrichtung an einer Ablageeinheit ablegbar und gemeinsam mit dem Manipulator verfahrbar sind, ohne jedoch durch ein Haltemittel gegen ein Bewegen festgelegt zu sein.

Beim Bearbeiten von Werkstücken durchlaufen die einzelnen Werkstücke entweder an einer Bearbeitungsstation eine Vielzahl von Bearbeitungsschritten oder werden zum Durchführen verschiedener Bearbeitungsschritte durch die Be- und/oder Entladeeinrichtung von einer Bearbeitungsstation zur nächsten Bearbeitungsstation transportiert. Eine Gesamtdauer der Bearbeitung eines Werkstücks setzt sich zusammen aus den Bearbeitungszeiten in der Bearbeitungsstation bzw. in den Bearbeitungsstationen und den Verfahrzeiten der Be- und/oder Entladeeinrichtung.

Aufgabe eines Ausführungsbeispiels der Erfindung ist, die Gesamtdauer der Bearbeitung eines Werkstücks zu reduzieren.

Diese Aufgabe wird bei einer eingangs genannten Be- und/oder Entladeeinrichtung gelöst durch mindestens ein Spannelement durch das der Greifgegenstand gegen ein Bewegen parallel, quer und schräg zur Verfahrrichtung festlegbar ist und durch mindestens eine an der Transporteinheit festgelegte Bearbeitungseinheit, durch die mindestens ein am Spannelement festgelegter Greifgegenstand, insbesondere spanabhebend, bearbeitbar ist.

Dadurch, dass die Ablageeinheit mindestens ein Haltemittel umfasst, durch das der mindestens eine Greifgegenstand gegen ein Bewegen zumindest quer oder schräg zur Verfahrrichtung festlegbar ist, wird ein Verrutschen oder Verschieben des mindestens einen Greifgegenstands bei Fahrmanövern mit hohen Beschleunigungskräften, wie beispielsweise abruptem Beschleunigen oder Bremsen, oder mit hohen Fliehkräften, beispielsweise bei Kurvenfahrten, reduziert. Hierdurch können Transfergeschwindigkeiten erhöht werden und die Gesamtdauer der Bearbeitung eines Werkstücks reduziert werden.

Durch das Vorsehen einer an der Transporteinheit festgelegten Bearbeitungseinheit ist es möglich, beim Betrieb der Be- und/oder Entladeeinrichtung Greifgegenstände zu bearbeiten. Hierdurch sind die Bearbeitungszeiten von Greifgegenständen in Bearbeitungsanlagen weiter verkürzbar.

Dadurch, dass der Greifgegenstand durch das Spannelement gehalten ist, kann die Bearbeitungseinheit mit Bearbeitungskräften auf den Greifgegenstand wirken, ohne dass der Greifgegenstand ausweichen kann.

Der Manipulator kann mehrachsig ausgebildet sein. Beispielsweise kann er einen 6-achsigen Industrieroboter umfassen. Darüber hinaus ist es denkbar, dass der Manipulator eine Kinematik umfasst, die Freiheitsgrade vergleichbar einer 6-achsigen Ausgestaltung ermöglicht.

Die Manipulatoreinheit und/oder die Ablageeinheit können unmittelbar an der Transporteinheit festgelegt sein oder mittelbar an der Transporteinheit festgelegt sein.

Das mindestens eine Haltemittel der Ablageeinheit lässt sich einfach und kostengünstig ausgestalten, wenn das mindestens eine Haltemittel der Ablageeinheit eine quer oder schräg zur Verfahrrichtung erstreckte Vertiefung umfasst, die insbesondere einen Querschnitt umfasst, der korrespondierend, insbesondere komplementär, zum Querschnitt des Greifgegenstands ausgebildet ist.

Solchenfalls kann der mindestens eine Greifgegenstand durch den Manipulator der Manipulatoreinheit beim Anordnen des mindestens einen Greifgegenstands puzzleartig an der Ablageeinheit abgelegt werden.

Darüber hinaus erweist es sich als vorteilhaft, wenn mindestens eines des mindestens einen Haltemittels das Spannelement umfasst.

Solchenfalls ist der mindestens eine Greifgegenstand relativ zur Ablageeinheit ortsfest festgelegt.

Bei einer weiteren Ausführungsform erweist es sich als vorteilhaft, wenn die Bearbeitungseinheit mindestens ein Werkzeug umfasst, durch das der am Spannelement festgelegte Greifgegenstand bearbeitbar ist, insbesondere wenn das mindestens eine Werkzeug ein Schleifwerkzeug, Fräswerkzeug, Bohrwerkzeug, Drehwerkzeug, Entgratungswerkzeug, Laserwerkzeug und/oder Prägewerkzeug umfasst.

Hierdurch können Bearbeitungen an den Bearbeitungsstationen entfallen, beispielsweise Entgraten oder Prägen, und stattdessen, vorbereitend oder ergänzend gleichzeitig mit dem Transfer der Greifgegenstände erfolgen. Hierdurch sind Bearbeitungszeiten verkürzbar.

Grundsätzlich ist es denkbar, dass die Greifgegenstände durch den Manipulator der Manipulatoreinheit von dem Haltemittel zum Spannelement überführt werden. Bei einer Ausführungsform der Be- und/oder Entladeeinrichtung ist mindestens ein an der Transporteinheit festgelegtes Handlingmittel zum zumindest Überführen eines Greifgegenstand von dem Haltemittel zum Spannelement oder vom Spannelement zum Haltemittel vorgesehen und/oder mindestens eine, zumindest ein Sensormittel umfassende, Steuereinheit zum Ansteuern zumindest des Handlingmittels, des Manipulators und/oder der Bearbeitungseinheit.

Weiter ist es denkbar, dass der Manipulator das Handlingmittel umfasst. Solchenfalls ist die Be- und/oder Entladeeinrichtung bauteilreduziert und kompakt ausbildbar. Ferner kann zusätzlich zum Manipulator ein weiterer Manipulator vorgesehen sein, der als Handlingmittel dient.

Darüber hinaus erweist es sich als vorteilhaft, wenn die Transporteinheit an einem Träger und/oder einer Schiene einer Bearbeitungsanlage geführt bewegbar ist oder wenn die Transporteinheit mindestens eine Abrolleinheit, wie Rade oder Kette, umfasst, durch die die Be- und Entladeeinrichtung frei bewegbar ist.

Die Transporteinheit kann beispielsweise einen Schlitten umfassen, der auf einem schienenartigen Träger der Bearbeitungsanlage entlanggleitbar ist. Solchenfalls kann die Be- und/oder Entladeeinrichtung auf Höhe eines Bodens verfahrbar sein oder zum Boden beabstandet verfahrbar sein.

Wenn die Transporteinheit mindestens eine Abrolleinheit, wie Rad oder Kette umfasst, ist die Be- und/oder Entladeeinrichtung frei in einem Raum bewegbar.

Ferner ist bei einer Ausführungsform der Be- und/oder Entladeeinrichtung vorgesehen, dass die Transporteinheit ein Transportmittel umfasst an dem die Manipulatoreinheit, die Ablageeinheit, die Bearbeitungseinheit, das Handlingmittel und Steuereinheit mittelbar oder unmittelbar festgelegt sind und/oder dass die Transporteinheit ein erstes Transportmittel, an dem die Manipulatoreinheit mittelbar oder unmittelbar festgelegt ist und mindestens ein zweites Transportmittel, das am ersten Transportmittel lösbar festlegbar oder festgelegt ist und an dem die Ablageeinheit, die Bearbeitungseinheit, das Handlingmittel und Steuereinheit mittelbar oder unmittelbar festgelegt sind.

Wenn die Transporteinheit lediglich ein einziges Transportmittel umfasst, ist die Be- und/oder Entladeeinrichtung kompakt ausbildbar. Wenn die Beund/oder Entladeeinrichtung ein erstes Transportmittel und ein zweites Transportmittel umfasst, sind herkömmliche Be- und/oder Entladeeinrichtungen modular und auf einfache Weise nachrüstbar. Darüber hinaus kann die Be- und/oder Entladeeinrichtung auch nur das erste Transportmittel mit der daran angeordneten Manipulatoreinheit umfassen, wenn ein Zwischenlagern oder ein paralleles Bearbeiten von Greifgegenständen nicht erforderlich ist.

Schließlich erweist es sich als vorteilhaft, wenn der Greifgegenstand ein Werkstück, ein Werkzeug und/oder ein Greifmittel des Manipulators umfasst.

Solchenfalls kann der Greifgegenstand nicht nur Werkstücke umfassen, die durch den Manipulator der Manipulatoreinheit an die jeweilige Bearbeitungsstation übergeben werden, sondern auch Werkzeuge, beispielsweise für die Handlingeinheit oder für die Bearbeitungsstationen sowie ein Greifmittel für den Manipulator der Manipulatoreinheit. Hierdurch können Verfahrzeiten reduziert werden, bei denen die Be- und/oder Entladeeinrichtung für bestimmte Aufträge umgerüstet werden müsste.

Darüber hinaus wird die Aufgabe gelöst durch ein Verfahren zum Betreiben einer Be- und/oder Entladeeinrichtung, insbesondere mit mindestens einem der zuvor genannten Merkmale, die mindestens eine Transporteinheit, die mindestens eine an der Transporteinheit festgelegte Manipulatoreinheit und die mindestens eine an der Transporteinheit festgelegte Ablageeinheit umfasst, mit den Schritten:
a. Anordnen von mindestens einem Greifgegenstand auf oder an der Ablageeinheit, insbesondere in oder an der mindestens einen Vertiefung der Ablageeinheit, durch die Manipulatoreinheit und/oder durch ein Handlingmittel;
b. Ggf. Verfahren der Be- und/oder Entladeeinrichtung, insbesondere an eine Bearbeitungsstation, wie Werkzeugmaschine;
c. Anordnen und/oder Entfernen mindestens eines Greifgegenstands in der Bearbeitungsstation;
d. Überführen mindestens eines Greifgegenstands von dem Haltemittel zu einem Spannelement durch die Manipulatoreinheit und/oder durch das Handlingmittel und Festlegen des Greifgegenstands im Spannelement;
e. Bearbeiten des im Spannelement festgelegten Greifgegenstands durch eine Bearbeitungseinheit; und
f. Überführen mindestens eines bearbeiteten Greifgegenstands von dem Spannelement zum Haltemittel.

Weitere Merkmale, Einzelheiten und Vorteile der Erfindung ergeben sich aus den beigefügten Patentansprüchen, aus der zeichnerischen Darstellung und nachfolgenden Beschreibung einer bevorzugten Ausführungsform der Beund/oder Entladeeinrichtung sowie des Verfahrens.

In der Zeichnung zeigt:
- Figur 1: Eine perspektivische seitliche Ansicht auf ein Ausführungsbeispiel einer Be- und/oder Entladeeinrichtung;
- Figur 2: Eine schematische seitliche perspektivische Ansicht auf das Ausführungsbeispiel gemäß Figur 1 in einer Bearbeitungsanlage; und
- Figur 3: Ein schematisches Ablaufdiagramm eines erfindungsgemäßen Verfahrens.

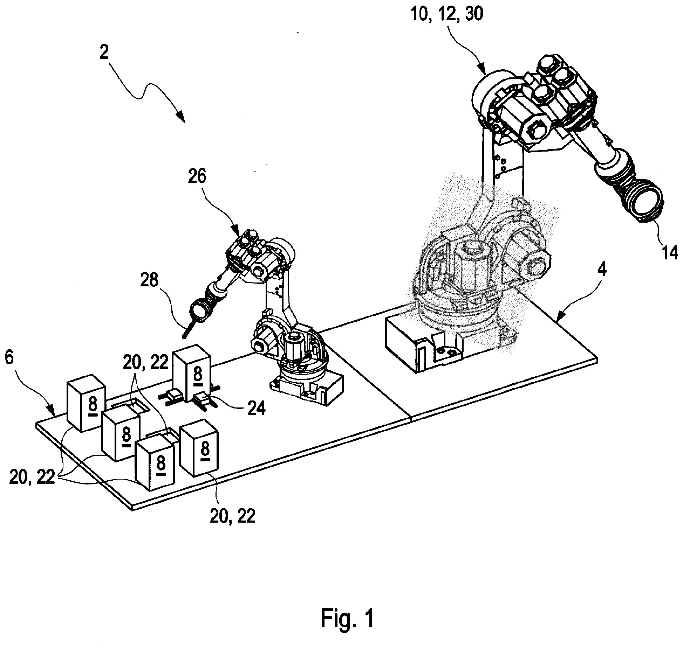

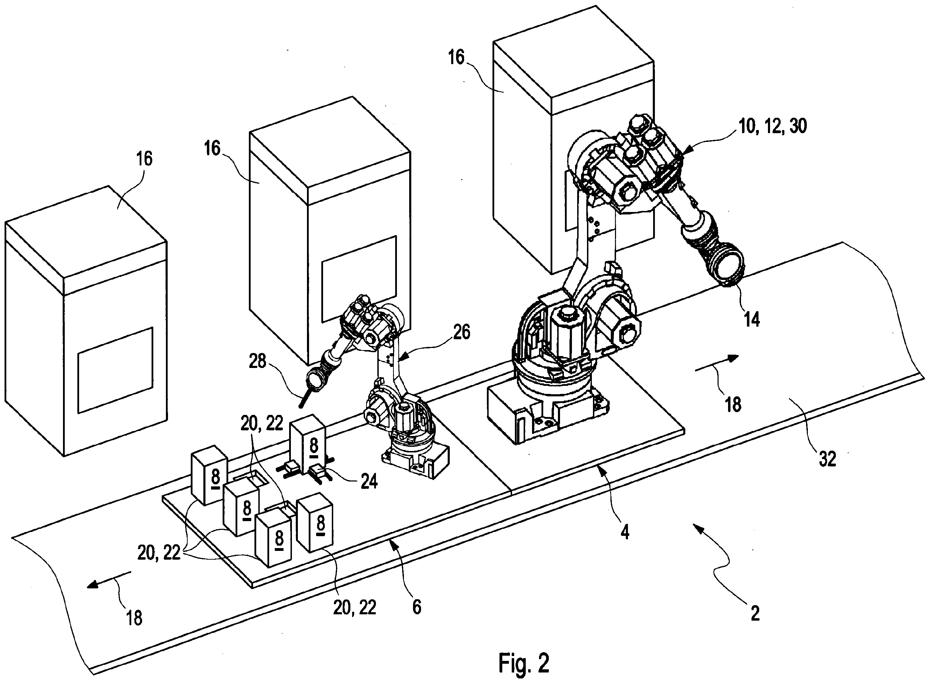

Figur 1 zeigt ein erstes Ausführungsbeispiel einer insgesamt mit dem Bezugszeichen 2 versehenen Be- und/oder Entladeeinrichtung. Die Beund/oder Entladeeinrichtung 2 umfasst eine Transporteinheit 4 zum Verfahren der Be- und/oder Entladeeinrichtung 2. Figur 2 zeigt die Beund/oder Entladeeinrichtung 2, bei der die Transporteinheit 4 entlang eines Trägers 32 verfahrbar ist.

Darüber hinaus umfasst die Be- und/oder Entladeeinrichtung 2 eine Ablageeinheit 6, die an der Transporteinheit 4 festlegbar ist. Auf der Ablageeinheit 6 ist mindestens ein Greifgegenstand 8 anordenbar.

Darüber hinaus umfasst die Be- und/oder Entladeeinrichtung 2 eine Manipulatoreinheit 10, die an der Transporteinheit 4 festlegbar ist und die mindestens einen Manipulator 12 umfasst. Mittels des Manipulators 12 der Manipulatoreinheit 10 ist mittels eines Greifmittels 14 des Manipulators 12 mindestens einer der Greifgegenstände 8 greifbar und einer Bearbeitungsstation 16 (Figur 2) oder der Ablageeinheit 6 zuführbar oder von dieser wieder entfernbar.

Um ein Bewegen der Greifgegenstände 8 quer oder schräg zu einer Verfahrrichtung 18 zu verhindern, umfasst die Ablageeinheit 6 mindestens ein Haltemittel 20.

Bei dem in den Figuren gezeigten Ausführungsbeispiel der Be- und/oder Entladeeinrichtung 2 umfasst das Haltemittel 20 eine Vertiefung 22, in der ein Greifgegenstand 8 anordenbar ist.

Darüber hinaus umfasst die Be- und/oder Entladeeinrichtung 2 ein Spannelement 24, durch das der Greifgegenstand 8 gegen ein Bewegen parallel, quer oder schräg zur Verfahrrichtung 18 festlegbar ist. Darüber hinaus umfass die Be-und/oder Entladeeinrichtung 2 eine Bearbeitungseinheit 26, die an der Transporteinheit 4 festgelegt ist. Durch die Bearbeitungseinheit 26 ist ein durch das Spannelement 24 gehaltener Greifgegenstand 8 bearbeitbar. Die Bearbeitungseinheit 26 kann ein Werkzeug 28 umfassen, das beispielsweise ein Schleifwerkzeug, Fräswerkzeug, Bohrwerkzeug, Drehwerkzeug, Entgratungswerkzeug und/oder Prägewerkzeug umfasst. Hierdurch sind die Greifgegenstände 8 bei Betrieb der Be- und/oder Entladeeinrichtung 2 bearbeitbar.

Um die Greifgegenstände 8 in oder an dem Spannelement 24 anzuordnen, umfasst die Be- und/oder Entladeeinrichtung ein Handlingmittel 30, das an der Transporteinheit 4 festgelegt ist. Durch das Handlingmittel 30 kann ein Greifgegenstand 8 von dem Haltemittel 20 übernommen und an das Spannelement 24 übergeben und dort festgelegt werden oder von dem Spannelement 24 entnommen und wieder an dem Haltemittel 20 angeordnet werden.

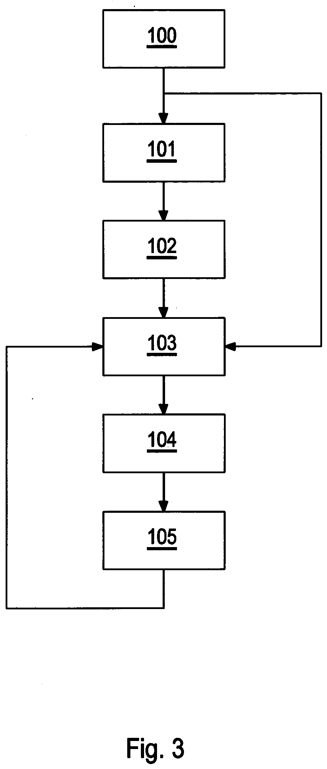

Bei dem in den Figuren gezeigten Ausführungsbeispiel ist das Handlingmittel 30 durch den Manipulator 12 der Manipulatoreinheit 10 gebildet. Anhand von Figur 3 unter Zuhilfenahme der Figuren 1 und 2, wird ein Verfahren zum Betreiben der Be- und/oder Entladeeinrichtung 2 beschrieben:
In einem ersten Schritt 100 wird mindestens ein Greifgegenstand 8 in oder an der Vertiefung 22 der Ablageeinheit 6 durch den Manipulator 12 der Manipulatoreinheit 10 angeordnet. In einem ggf. stattfindenden folgenden Schritt 101 wird die Be- und/oder Entladeeinrichtung 2 zu einer Bearbeitungsstation 16 verfahren. Darüber hinaus ist es denkbar, dass bei dem Schritt 101 die Be- und/oder Entladeeinrichtung 2 von einer Bearbeitungsstation 16 zu einer weiteren Bearbeitungsstation 16 verfahren wird.

Beim Erreichen einer Bearbeitungsstation 16 wird mittels des Manipulators 12 der Manipulatoreinheit 10 mindestens ein Greifgegenstand 8 in der Bearbeitungsstation 16 angeordnet. Darüber hinaus kann in einem Schritt 102 auch ein Greifgegenstand 8 durch den Manipulator 12 der Manipulatoreinheit 10 aus der Bearbeitungsstation 16 entfernt und an der Ablageeinheit 6 angeordnet werden. Parallel zu den Schritten 100 bis102 oder im Anschluss an die Schritte 100 bis102, kann mindestens ein Greifgegenstand 8, der in einem Haltemittel 20 der Ablageeinheit 6 angeordnet ist, durch das Handlingmittel 30 von dem Haltemittel 20 an das Spannelement 24 überführt werden. In dem Spannelement 24 wird der Greifgegenstand 8 gegen ein Bewegen festgelegt.

Hiernach erfolgt in einem Schritt 104 ein Bearbeiten des Greifgegenstands 8 durch die Bearbeitungseinheit 26. Nach Beenden des Bearbeitens des Greifgegenstands 8 durch die Bearbeitungseinheit 26 wird der Greifgegenstand 8 von dem Handlingmittel 30 aus dem Spannelement 24 entfernt und am Haltemittel 20 der Transporteinheit 4 angeordnet. Unmittelbar hieran anschließend kann das Handlingmittel 30 einen bisher unbearbeiteten Greifgegenstand 8 aus einem Haltemittel 20 in der Transporteinheit 4 entfernen und an dem Spannelement 24 anordnen, um diesen dort von der Bearbeitungseinheit 26 bearbeiten zu lassen.

### Bezugszeichenliste

- 2: Be- und/oder Entladeeinrichtung
- 4: Transporteinheit
- 6: Ablageeinheit
- 8: Greifgegenstand
- 10: Manipulatoreinheit
- 12: Manipulator
- 14: Greifmittel
- 16: Bearbeitungsstation
- 18: Verfahrrichtung
- 20: Haltemittel
- 22: Vertiefung
- 24: Spannelement
- 26: Bearbeitungseinheit
- 28: Werkzeug
- 30: Handlingmittel
- 32: Träger

## Patentansprüche

1. Verfahrbare Be- und/oder Entladeeinrichtung (2) mit mindestens einer Transporteinheit (4) zum Verfahren der Be- und/oder Entladeeinrichtung (2) mit mindestens einer an der Transporteinheit (4) festgelegten Ablageeinheit (6), auf der mindestens ein Greifgegenstand (8) anordenbar oder angeordnet ist und mit mindestens einer an der Transporteinheit (4) festgelegten Manipulatoreinheit (10), die mindestens einen, insbesondere mehrachsigen, Manipulator (12) umfasst, der mindestens ein Greifmittel (14) zum Greifen des mindestens einen Greifgegenstands (8) umfasst und durch den mindestens der mindestens eine Greifgegenstand (8) in einer Bearbeitungsstation (16), wie Werkzeugmaschine, und/oder in oder auf der Ablageeinheit (6) anordenbar und/oder entfernbar ist, wobei die Ablageeinheit (6) mindestens ein Haltemittel (20) umfasst, durch das der mindestens eine Greifgegenstand (8) gegen ein Bewegen zumindest quer oder schräg zur Verfahrrichtung (18) der Be- und Entladeeinrichtung (2) festlegbar ist,
**gekennzeichnet durch** mindestens ein Spannelement (24), durch das der Greifgegenstand (8) gegen ein Bewegen parallel, quer und schräg zur Verfahrrichtung (18) festlegbar ist und durch mindestens eine an der Transporteinheit (4) festgelegte Bearbeitungseinheit (26), durch die mindestens ein am Spannelement (24) festgelegter Greifgegenstand (8) bearbeitbar ist.

2. Be- und/oder Entladeeinrichtung (2) nach Anspruch 1, **dadurch gekennzeichnet, dass** das mindestens eine Haltemittel (20) der Ablageeinheit (6) eine quer oder schräg zur Verfahrrichtung (18) erstreckte Vertiefung (22) umfasst, die insbesondere einen Querschnitt umfasst, der korrespondierend, insbesondere komplementär, zum Querschnitt des Greifgegenstands (8) ausgebildet ist.

3. Be- und/oder Entladeeinrichtung (2) nach Anspruch 1 oder 2, **dadurch gekennzeichnet, dass** mindestens eines des mindestens einen Haltemittels (20) das Spannelement (24) umfasst.

4. Be- und/oder Entladeeinrichtung (2) nach mindestens einem der vorhergehenden Ansprüche, **dadurch gekennzeichnet, dass** die Bearbeitungseinheit (26) mindestens ein Werkzeug umfasst, durch das der am Spannelement (24) festgelegte Greifgegenstand (8) bearbeitbar ist, insbesondere, dass das mindestens eine Werkzeug (28) ein Schleifwerkzeug, Fräswerkzeug, Bohrwerkzeug, Drehwerkzeug, Entgratungswerkzeug; Laserwerkzeug und/oder Prägewerkzeug umfasst.

5. Be- und/oder Entladeeinrichtung (2) nach mindestens einem der vorhergehenden Ansprüche, **gekennzeichnet durch** mindestens ein an der Transporteinheit (4) festgelegtes Handlingmittel (30) zum zumindest Überführen eines Greifgegenstands (8) von dem Haltemittel (20) zum Spannelement (24) oder vom Spannelement (24) zum Haltemittel (20) und/oder durch mindestens eine, zumindest ein Sensormittel umfassenden Steuereinheit zum Ansteuern zumindest des Handlingsmittels (30), des Manipulators (12) und/oder der Bearbeitungseinheit (26).

6. Be- und/oder Entladeeinrichtung (2) nach mindestens einem der vorhergehenden Ansprüche, **dadurch gekennzeichnet, dass** die Transporteinheit (4) an einem Träger und/oder Schiene einer Bearbeitungsanlage geführt bewegbar ist oder dass die Transporteinheit (4) mindestens eine Abrolleinheit, wie Rade oder Kette, umfasst, durch die die Be- und Entladeeinrichtung (2) frei bewegbar ist.

7. Be- und/oder Entladeeinrichtung (2) nach mindestens einem der vorhergehenden Ansprüche, **dadurch gekennzeichnet, dass** die Transporteinheit (4) ein Transportmittel umfasst an dem die Manipulatoreinheit (10), die Ablageeinheit (6), die Bearbeitungseinheit (26), das Handlingmittel (30) und Steuereinheit mittelbar oder unmittelbar festgelegt sind und/oder dass die Transporteinheit (4) ein erstes Transportmittel, an dem die Manipulatoreinheit (10) mittelbar oder unmittelbar festgelegt ist und mindestens ein zweites Transportmittel, das am ersten Transportmittel lösbar festlegbar oder festgelegt ist und an dem die Ablageeinheit (6), die Bearbeitungseinheit (26), das Handlingmittel (30) und Steuereinheit mittelbar oder unmittelbar festgelegt sind.

8. Be- und/oder Entladeeinrichtung (2) nach mindestens einem der vorhergehenden Ansprüche, **dadurch gekennzeichnet, dass** der Greifgegenstand (8) ein Werkstück, ein Werkzeug (28) und/oder ein Greifmittel (14) des Manipulators (12) umfasst.

9. Verfahren zum Betreiben einer Be- und/oder Entladeeinrichtung (2) nach einem der Ansprüche 1 bis 8, mit den Schritten:
a. Anordnen von mindestens einem Greifgegenstand (8) auf oder an der Ablageeinheit (6), insbesondere in oder an der mindestens einen Vertiefung (22) der Ablageeinheit (6), durch die Manipulatoreinheit (10) und/oder durch ein Handlingmittel (30);
b. Ggf. Verfahren der Be- und/oder Entladeeinrichtung (2), insbesondere an eine Bearbeitungsstation (16), wie Werkzeugmaschine;
c. Anordnen und/oder Entfernen mindestens eines Greifgegenstands (8) in der Bearbeitungsstation (16);
d. Überführen mindestens eines Greifgegenstands (8) von dem Haltemittel (20) zu einem Spannelement (24) durch die Manipulatoreinheit (10) und/oder durch das Handlingmittel (30) und Festlegen des Greifgegenstands (8) im Spannelement (24);
e. Bearbeiten des im Spannelement (24) festgelegten Greifgegenstands (8) durch eine Bearbeitungseinheit (26);
f. Überführen mindestens eines bearbeiteten Greifgegenstands (8) von dem Spannelement (24) zum Haltemittel (20).

## Claims

1. Movable loading and/or unloading device (2) with at least one transport unit (4) for moving the loading and/or unloading device (2) with at least one storage unit (6) fixed to the transport unit (4), on which at least one gripped object (8) can be arranged or is arranged and has at least one manipulator unit (10) fixed to the transport unit (4), which comprises of at least one, in particular multi-axis, manipulator (12) which has at least one means of gripping (14) for gripping the at least one gripped object (8) and by means of which at least the one gripped object (8) can be arranged and/or removed in a processing station (16), such as a machine tool, and/or in or on the storage unit (6), the storage unit (6) having at least one holding means (20) by which the at least one gripped object (8) can be fixed against movement, at least transversely, or at an angle to the direction of travel (18) of the loading and unloading device (2), **characterised by** at least one clamping element (24) by which the gripped object (8) can be fixed against movement parallel, transverse and oblique to the direction of travel (18) and by at least one processing unit (26) fixed on the transport unit (4), through which the at least one gripped object (8) fixed to the clamping element (24) can be processed.

2. Loading and/or unloading device (2) according to claim 1, **characterised in that** the at least one retainer (20) of the storage unit (6) comprises a recess (22) extending transversely or obliquely to the direction of travel (18), which recess (22) in particular comprises of a cross-section which is designed to correspond, in particular to complement, the cross-section of the gripping object (8).

3. Loading and/or unloading device (2) according to Claim 1 or 2, **characterised in that** at least one of the minimum one retainer (20) comprises the clamping element (24).

4. Loading and/or unloading device (2) according to at least one of the preceding claims, **characterised in that** the processing unit (26) comprises at least one tool with which the gripped object (8) fixed to the clamping element (24) can be processed, in particular **in that** the at least one tool (28) comprises a grinding tool, milling tool, drilling tool, turning tool, deburring tool; laser tool and/or embossing tool.

5. Loading and/or unloading device (2) according to at least one of the preceding claims, **characterised by** at least one handling means (30) fixed to the transport unit (4) for at least transferring a gripped object (8) from the retainer (20) to the clamping element (24) or from the clamping element (24) to the holding means (20) and/or by at least one control unit comprising at least one sensor for controlling at least the handling means (30), the manipulator (12) and/or the processing unit (26).

6. Loading and/or unloading device (2) according to at least one of the preceding claims, **characterised in that** the transport unit (4) can be moved, guided on a carrier and/or rail of a processing system, or that the transport unit (4) has at least one rolling unit, such as a wheel or chain, through which the loading and unloading device (2) can be freely moved.

7. Loading and/or unloading device (2) according to at least one of the preceding claims, **characterised in that** the transport unit (4) comprises a transport means on which the manipulator unit (10), the storage unit (6), the processing unit (26), the handling means (30) and control unit are directly or indirectly fixed and/or that the transport unit (4) has a first means of transport to which the manipulator unit (10) is directly or indirectly fixed and at least one second means of transport which can be fixed or is releasably fixed to the first means of transport and on which the storage unit (6), the processing unit (26), the handling means (30) and the control unit are directly or indirectly fixed.

8. Loading and/or unloading device (2) according to at least one of the preceding claims, **characterised in that** the gripped object (8) comprises a workpiece, a tool (28) and/or a gripping means (14) of the manipulator (12).

9. Method for operating a loading and/or unloading device (2) according to one of claims 1 to 8, with the steps:
a. Arrangement of at least one gripped object (8) on or at the storage unit (6), in particular in or at the at least one recess (22) of the storage unit (6), by the manipulator unit (10) and/or by a handling means (30);
b. Where applicable, moving the loading and/or unloading device (2), in particular to a processing station (16), such as a machine tool;
c. Arranging and/or removing at least one gripped object (8) in the processing station (16);
d. Transferring at least one gripped object (8) from the retainer (20) to a clamping element (24) by the manipulator unit (10) and/or by the handling means (30) and fixing the gripped object (8) in the clamping element (24);
e. Processing of the gripped object (8) fixed in the clamping element (24) by a processing unit (26);
f. Transferring at least one processed gripped object (8) from the clamping element (24) to the retainer (20).

## Revendications

1. Dispositif de chargement et/ou de déchargement mobile (2) avec au moins une unité de transport (4) pour déplacer le dispositif de chargement et/ou de déchargement (2) avec au moins une unité de dépôt (6) fixée à l'unité de transport (4), sur laquelle au moins un objet de préhension (8) peut être disposé ou est disposé et avec au moins une unité de manipulation (10) fixée à l'unité de transport (4), qui comprend au moins un manipulateur (12), en particulier à plusieurs axes, qui comprend au moins un moyen de préhension (14) pour saisir le au moins un objet de préhension (8) et par lequel au moins le au moins objet de préhension (8) peut être disposé et/ou enlevé dans un poste d'usinage (16), tel qu'une machine-outil, et/ou dans ou sur l'unité de dépôt (6), l'unité de dépôt (6) comprenant au moins un moyen de maintien (20) par lequel au moins un objet de préhension (8) peut être fixé contre un déplacement au moins transversalement ou obliquement par rapport à la direction de déplacement (18) du dispositif de chargement et de déchargement (2), **caractérisé par** au moins un élément de serrage (24), par lequel l'objet de préhension (8) peut être fixé contre un déplacement parallèlement, transversalement et obliquement par rapport à la direction de déplacement (18) et par au moins une unité d'usinage (26) fixée à l'unité de transport (4), par laquelle au moins un objet de préhension (8) fixé à l'élément de serrage (24) peut être usiné.

2. Dispositif de chargement et/ou de déchargement (2) selon la revendication 1, **caractérisé en ce qu'**au moins un moyen de maintien (20) de l'unité de dépôt (6) comprend un renfoncement (22) qui s'étend transversalement ou obliquement par rapport à la direction de déplacement (18) et qui comprend en particulier une section transversale qui est réalisée de manière à correspondre, notamment de manière complémentaire, à la section transversale de l'objet de préhension (8).

3. Dispositif de chargement et/ou de déchargement (2) selon la revendication 1 ou 2, **caractérisé en ce qu'**au moins un du au moins un moyen de maintien (20) comprend l'élément de serrage (24).

4. Dispositif de chargement et/ou de déchargement (2) selon au moins l'une des revendications précédentes, **caractérisé en ce que** l'unité d'usinage (26) comprend au moins un outil par lequel l'objet de préhension (8) fixé à l'élément de serrage (24) peut être usiné, en particulier **en ce que** le au moins un outil (28) comprend un outil de meulage, un outil de fraisage, un outil de perçage, un outil de tournage, un outil d'ébavurage, un outil laser et/ou un outil de gaufrage.

5. Dispositif de chargement et/ou de déchargement (2) selon au moins l'une des revendications précédentes, **caractérisé par** au moins un moyen de manutention (30) fixé à l'unité de transport (4) pour au moins transférer un objet de préhension (8) du moyen de maintien (20) à l'élément de serrage (24) ou de l'élément de serrage (24) au moyen de maintien (20) et/ou par au moins une unité de commande comprenant au moins un moyen de détection pour commander au moins le moyen de manutention (30), le manipulateur (12) et/ou l'unité d'usinage (26).

6. Dispositif de chargement et/ou de déchargement (2) selon au moins l'une des revendications précédentes, **caractérisé en ce que** l'unité de transport (4) peut être déplacée en étant guidée sur un support et/ou un rail d'une installation d'usinage ou **en ce que** l'unité de transport (4) comprend au moins une unité de déroulement, telle qu'une roue ou une chaîne, par laquelle le dispositif de chargement et de déchargement (2) peut être déplacé librement.

7. Dispositif de chargement et/ou de déchargement (2) selon au moins l'une des revendications précédentes, **caractérisé en ce que** l'unité de transport (4) comprend un moyen de transport sur lequel l'unité de manipulation (10), l'unité de dépôt (6), l'unité d'usinage (26), le moyen de manutention (30) et l'unité de commande sont fixés directement ou indirectement et/ou **en ce que** l'unité de transport (4) un premier moyen de transport, sur lequel l'unité de manipulation (10) est fixée directement ou indirectement et au moins un deuxième moyen de transport qui peut être fixé ou est fixé de manière amovible sur le premier moyen de transport et sur lequel l'unité de dépôt (6), l'unité d'usinage (26), le moyen de manutention (30) et l'unité de commande sont fixés directement ou indirectement.

8. Dispositif de chargement et/ou de déchargement (2) selon au moins l'une des revendications précédentes, **caractérisé en ce que** l'objet de préhension (8) comprend une pièce, un outil (28) et/ou un moyen de préhension (14) du manipulateur (12).

9. Procédé d'exploitation d'un dispositif de chargement et/ou de déchargement (2) selon l'une des revendications 1 à 8, comprenant les étapes suivantes :
a. Mise en place d'au moins un objet de préhension (8) sur ou à l'unité de dépôt (6), en particulier dans ou sur le renfoncement (22) de l'unité de dépôt (6), par l'unité de manipulation (10) et/ou par un moyen de manutention (30) ;
b. Le cas échéant, déplacement du dispositif de chargement et/ou de déchargement (2), en particulier vers un poste d'usinage (16), comme une machine-outil ;
c. Mise en place et/ou enlèvement d'au moins un objet de préhension (8) dans le poste d'usinage (16) ;
d. Transfert d'au moins un objet de préhension (8) du moyen de maintien (20) à un élément de serrage (24) par l'unité de manipulation (10) et/ou par le moyen de manutention (30) et fixation de l'objet de préhension (8) dans l'élément de serrage (24) ;
e. Usinage de l'objet de préhension (8) fixé dans l'élément de serrage (24) par une unité d'usinage (26) ;
f. Transfert d'au moins un objet de préhension usiné (8) de l'élément de serrage (24) au moyen de maintien (20).
